# EUROPEAN PATENT SPECIFICATION

(11) **EP 0 440 410 B1**
(45) Date of publication and mention of the grant of the patent: **13.08.1997**
(21) Application number: 91300648.2
(22) Date of filing: 29.01.1991
(51) Int. Cl.: B32B 25/10, B29C 65/00, B29C 65/36

(54) **Method for joining FRP material with vulcanized rubber**
Verfahren zur Verbindung von faserverstärkten Kunststoffstrukturen mit vulkanisiertem Gummi
Procédé pour la liaison de matière plastique renforcée par des fibres et de caoutchouc vulcanisé

(30) Priority: 29.01.1990 JP 18289/90
(43) Date of publication of application: 07.08.1991
(73) Proprietor: KINUGAWA RUBBER INDUSTRIAL CO., LTD., Chiba-shi Chiba-ken (JP)
(72) Inventor: Hamada, Hiroshi, c/o Kinugawa Rubber Ind.Co.,Ltd., Chiba-shi,Chiba-ken (JP)
(74) Representative: Carter, Caroline Ann

(56) References cited:
- EP-A- 0 171 604
- AT-A- 308 398
- FR-A- 1 234 921
- GB-A- 1 116 041
- GB-A- 1 135 803
- GB-A- 2 109 384
- US-A- 4 456 496
- EP-A- 0 171 604
- AT-A- 308 398
- FR-A- 1 234 921
- GB-A- 1 116 041
- GB-A- 1 135 803
- GB-A- 2 109 384
- US-A- 4 456 496

## Description

The present invention relates to a method for joining fiber reinforced plastics (FRP) material with vulcanized rubber. More specifically, the present invention relates to a method for joining FRP material with vulcanized rubber using an adhesive agent.

Generally, methods for joining metallic materials with vulcanized rubber have been well known in the art. For example, Japanese Patent Second Publication (allowed) No. 59-19018 discloses such a method. An adhesive is applied to a surface of a metallic material, then the surface is pressed to seal with a surface of vulcanized rubber. Thereafter, the sealed surfaces are heated at 150°C to 250°C for 0.5 to 3.0 min. The adhesive is thus melted by exothermic reaction with the metallic material and sealing is accomplished.

On the other hand, recently, the mechanical strength of FRP materials (such as Graphite FRP or Carbon FRP) has been greatly improved. Structural bodies formed of FRP materials have been utilized in certain applications instead of metallic materials.

However, certain problems arise when joining FRP materials with vulcanized rubber.

First, adhesion techniques used for metallic materials cannot be used for FRP materials, principally because, when a body formed from FRP is heated, mechanical properties thereof, particularly mechanical strength and geometrical accuracy, are significantly impaired. Therefore, heated FRP is of little use. Adhesives which are not heated (but are adhered at ambient temperature) are also available. However, when surrounding temperatures rise to more than 100°C, the adhesion strength of these adhesives deteriorates significantly. Therefore, because of lack of adhesion reliability, this method also cannot be used, especially for joining of mechanical structures.

Secondly, adhesion techniques for FRP materials with vulcanized rubber have not been established to any significant extent. Therefore, in spite of FRP materials being substantially available as a replacement for metallic materials, as far as mechanical strength is concerned, effective replacement is hindered because of the lack of adhesion reliability thereof.

It is therefore a principal object of the present invention to provide a method for joining FRP material with vulcanized rubber using an adhesive material.

It is another object of the present invention to provide a method for joining FRP material with vulcanized rubber without degrading the mechanical properties of the FRP material.

It is a further object of the present invention to provide a method for joining FRP material with vulcanized rubber with high adhesive strength and reliability.

It is furthermore an object of the present invention to provide a method using an adhesive material having high adhesive strength and reliability, so as to join FRP material with vulcanized rubber.

The present invention provides a method of bonding a fiber reinforced plastic (hereinafter FRP) material and a vulcanized rubber comprising positioning an adhesive and a heat-generating material between opposed surfaces of FRP material and vulcanized rubber to form a laminate, applying pressure to the laminate, and raising the temperature of the heat-generating material sufficiently to establish adhesion between the FRP material and the vulcanized rubber. Advantageously, the adhesive material is a halogenated rubber, a phenolic adhesive or an isocyanate adhesive. The heat-generating material is preferably one that generates heat on being subjected to electrical, electromagnetic, or magnetic forces.

The FRP material may be, for example, an epoxy FRP material or an aramid FRP material. The fibre reinforcement of the FRP material may be, for example, glass fiber, carbon fiber, aromatic polyamide fiber, or a mixture of two or more such fibers.

The heat-generating may be dispersed throughout the adhesive. It is also possible for the heat-generating material to be applied in the form of a tape or film. Such a tape or film advantageously has apertures therein to allow formation on heating of a continuous mass or layer of adhesive between the FRP and vulcanized rubber surfaces, or is miscible with the adhesive on heating to form a continuous adhesive layer.

According to one aspect of the present invention, a method for joining FRP material and vulcanized rubber comprises blending exothermic material into an adhesive material, applying said adhesive material between facing surfaces of FRP material and vulcanized rubber to form a laminate, pressing said laminate, and heating said laminate to induce exothermic reaction of said exothermic material for establishment of adhesion between said FRP material and said vulcanized rubber.

The heat-generating material used in accordance with the invention may be a dielectric material, for example a material selected from the group consisting of barium titanate, and high molecular compounds comprising polyacrylonitrile and polyvinyl chloride. The high molecular compounds have a high loss factor.

Alternatively, the heat-generating material may be a ferromagnetic material selected, for example, from the group consisting of iron, nickel, cobalt and ferrite.

Alternatively, the heat-generating material may also be a conductive material selected, for example, from the group consisting of carbon black, aluminium, copper, chromium, nickel, stainless steel and zinc.

The dielectric material is advantageously heated by dielectric heating, preferably by high frequency heating at a frequency of up to 10 MHz. The ferromagnetic material is advantageously heated by induction heating, preferably by high frequency heating at a frequency of at least 10 MHz. The conductive material is advantageously heated by electric heating.

The invention also provides the use of a heat-generating material, especially one activatable by electrical, electro-magnetic, or magnetic forces, to raise the temperature of a heat-activated adhesive with which it is in thermal contact to a temperature sufficient to activate the adhesive to bond surfaces which are of a material or materials that is or are sensitive to heat, one surface comprising FRP material and the other surface comprising an elastomer.

The invention further provides the use, for joining FRP material and vulcanized rubber, of an adhesive material comprising exothermic material in a proportion sufficient to cause exothermic reaction such that the adhesive material reaches a temperature at which adhesion can take place.

The present invention will be understood more fully from the detailed description given herebelow and from the accompanying drawings of preferred embodiments of the invention. However, the drawings are not intended to imply limitation of the invention to a specific embodiment, but are for explanation and understanding only.

In the drawings:
Fig. 1 is a sectional view of a first or second embodiment of the present invention;
Fig. 2 is a sectional view of a third embodiment of the present invention; and
Fig. 3 is a sectional view of a fourth embodiment of the present invention.

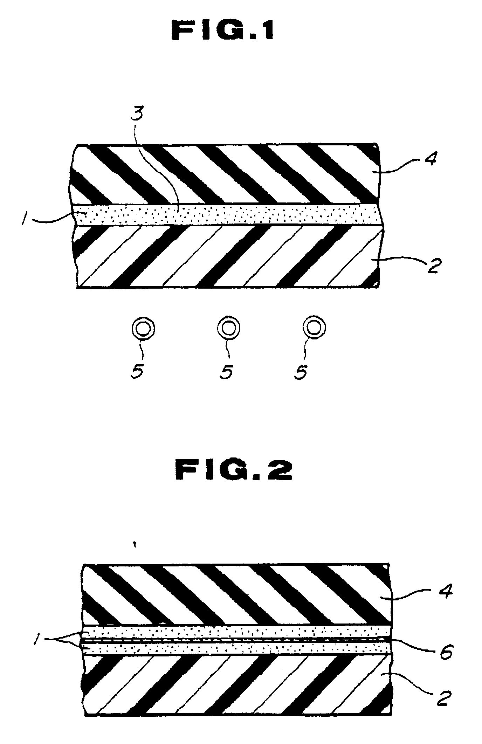

Referring now to the drawings, particularly to Fig. 1 indicating a first embodiment of the present invention, an adhesive material 1 is applied on a surface of FRP material 2 formed of epoxy resin, such as GFRP or CFRP, or aramid FRP (using aramid fiber reinforcement). As the adhesive material 1, halogenated rubber, phenol and/or isocyanate type adhesives are preferred. Particles of ferromagnetic materials 3 such as particles of iron, nickel, cobalt, or ferrite are blended in the adhesive material 1 beforehand at a desired blending ratio. Then vulcanised rubber 4 is layered on the surface of the FRP material 2 where the adhesive 1 is applied, and pressed thereagainst. The rubber material 4 may be at least one of natural rubber, and synthetic rubber, for example, SBR, BR, CPDM, and CR. High frequency heating is effected by a coil 5 of high frequency heating equipment (not shown in the drawings) activated at a frequency less than 10 MHz. Heat is generated within the adhesive 1, which includes the particles of ferromagnetic materials 3, by induction heating, and the temperature of the adhesive 1 rises immediately to adherable temperature, so that joining of the FRP material 2 with the vulcanized rubber 4 can be effected.

While high frequency heating is applied, the heated area is limited to the area where sufficient induction heating can be derived. That is, no more than a small area adjacent to the abutting surfaces of the FRP material 2 and the vulcanized rubber 4 is heated. Therefore, the materials are never heated entirely and deterioration thereof does not occur.

According to a second embodiment of the present invention, instead of ferromagnetic materials 3, particles of dielectric materials selected from, for example, barium titanate, polyacrylonitrile and polyvinyl chloride may be blended in the adhesive material 1 to obtain the same effect. In this case, heat is generated within the adhesive material by dielectric heating derived from the high frequency heating. High frequency heating at at least 10 MHz is desirable according to this method.

Alternatively, in a third embodiment of the present invention, ferromagnetic materials in the form of a foil (film) or tape may be used together with the adhesive. In this case, a foil or tape of ferromagnetic material 6 is applied on the surface of the FRP material 2 via the adhesive 1 to form a laminate as shown in Fig. 2. The vulcanized rubber 4 is pressed against the ferromagnetic foil or tape 6 via the adhesive 1. High frequency heating is applied to the laminate thereafter. Preferably, numerous holes are formed in the foil 6 beforehand to ensure adhesive strength.

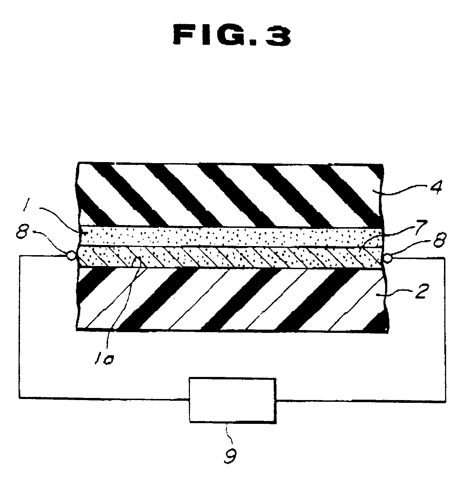

Referring now to Fig. 3, which shows a fourth embodiment according to the present invention, using an adhesive together with conductive materials is also possible. A conductive coating material 7 is applied on the surface of the FRP material 2, the adhesive 1 is laminated thereon, then vulcanized rubber 4 is pressed on the adhesive 1. The conductive coating 7 is heated electrically by the electrical source 9 via electrodes 8, 8 disposed on both edges of the coating 7. As the heated area of the FRP material 2 and the vulcanized rubber 4 is limited to an area within the abutting surfaces thereof, the mechanical strength of the materials does not deteriorate, unlike conventional adhesion techniques.

Additionally, conductive materials such as aluminium, chromium, nickel or stainless steel in foil or tape form may be used instead of the conductive coating 7 in the same manner as shown in Fig. 2. Particles of carbon black, aluminium, copper, are also preferable as conductive materials. It is also possible to deposit the conductive material, for example, aluminium, zinc or the like, directly to the joining surface, for example, the surface of the FRP material, by, for example, flame spraying.

Thus, materials included in the adhesive are preferably heated by dielectric heating when using dielectric material, by induction heating when using ferromagnetic material, or by electric heating when using conductive material. In all cases, the adhesive is heated rapidly to an adherable temperature, whereupon the FRP material and the vulcanized rubber can be joined strongly via the adhesive. These materials act as exothermic bodies, and no more than the joining area of the FRP and the rubber are heated. Therefore, the whole body of the FRP and the rubber are never heated and the temperature may be raised rapidly without causing deterioration of the mechanical or geometric characteristics of either material. Additionally, adhesive strength and reliability can be greatly improved.

## Claims

1. A method of bonding a fiber reinforced plastic (hereinafter FRP) material and a vulcanized rubber comprising positioning an adhesive and a heat-generating material between opposed surfaces of FRP material and vulcanized rubber to form a laminate, applying pressure to the laminate, and raising the temperature of the heat-generating material sufficiently to establish adhesion between the FRP material and the vulcanized rubber.

2. A method as claimed in claim 1, wherein the fiber reinforcement of the FRP material is glass fiber, carbon fiber, aromatic polyamide fiber, or a mixture of two or more such fibers.

3. A method as claimed in claim 1 or claim 2, wherein the vulcanized rubber is natural rubber, or a synthetic rubber, for example, SBR, BR, EPDM, or CR, or a blend of two or more such rubbers.

4. A method as claimed in any one of claims 1 to 3, wherein the heat-generating material is one that generates heat on being subjected to electrical, electromagnetic, or magnetic forces.

5. A method as claimed in any one of claims 1 to 4, wherein the heat-generating material is a dielectric and the heating is effected by dielectric heating.

6. A method as claimed in any one of claims 1 to 4, wherein the heat-generating material is a ferromagnetic material and the heating is effected by induction heating.

7. A method as claimed in any one of claims 1 to 4, wherein the heat-generating material is an electrically conductive material and the heating is effected by electric heating.

8. A method as claimed in any one of claims 1 to 7, wherein the adhesive material is a halogenated rubber, a phenolic adhesive or an isocyanate adhesive.

9. A method as claimed in any one of claims 1 to 8, wherein the heat-generating material is dispersed throughout the adhesive.

10. A method as claimed in any one of claims 1 to 8, wherein the heat-generating material is applied in the form of a tape or film.

11. A method as claimed in claim 7, or in claim 8 as dependent on claim 7, wherein the conductive material is deposited directly on the surface of the FRP material.

12. The use of a heat-generating material, especially one activatable by electrical, electromagnetic, or magnetic forces, to raise the temperature of a heat-activated adhesive with which it is in thermal contact to a temperature sufficient to activate the adhesive to bond surfaces which are of a material or materials that is or are sensitive to heat, one surface comprising FRP material and the other surface comprising an elastomer.

13. The use, for joining FRP material and vulcanized rubber, of an adhesive material comprising exothermic material in a proportion sufficient to cause exothermic reaction such that the adhesive material reaches a temperature at which adhesion can take place.

## Patentansprüche

1. Verfahren zum Verbinden eines faserverstärkten Kunststoffmaterials und eines vulkanisierten Gummis, umfassend das Anordnen eines Klebstoffs und eines wärmeerzeugenden Materials zwischen gegenüberliegenden Oberflächen des faserverstärkten Kunststoffmaterials und des vulkanisierten Gummis, um ein Laminat zu bilden, das Aufbringen von Druck auf das Laminat und das Anheben der Temperatur des wärmeerzeugenden Materials ausreichend hoch, um eine Verklebung zwischen dem faserverstärkten Kunststoffmaterial und dem vulkanisierten Gummi hervorzurufen.

2. Verfahren nach Anspruch 1, bei dem die Fasereinlage des faserverstärkten Kunststoffmaterials aus Glasfaser, Kohlefaser, aromatischen Polyamidfasern oder einem Gemisch aus zwei oder mehr solcher Fasern besteht.

3. Verfahren nach Anspruch 1 oder 2, bei dem der vulkanisierte Gummi Naturgummi oder ein synthetischer Gummi ist, beispielsweise SBR, BR, EPDM oder CR oder ein Gemisch aus zwei oder mehr solcher Gummis.

4. Verfahren nach einem der Ansprüche 1 bis 3, bei dem das wärmeerzeugende Material eines ist, das Wärme entwickelt, wenn es elektrischen, elektromagnetischen oder magnetischen Kräften unterworfen wird.

5. Verfahren nach einem der Ansprüche 1 bis 4, bei dem das wärmeerzeugende Material ein dielektrisches Material ist und die Erwärmung durch dielektrische Erwärmung hervorgerufen wird.

6. Verfahren nach einem der Ansprüche 1 bis 4, bei dem das wärmeerzeugende Material ein ferromagnetisches Material ist und die Erwärmung durch Induktionserwärmung ausgeführt wird.

7. Verfahren nach einem der Ansprüche 1 bis 4, bei dem das wärmeerzeugende Material ein elektrisch leitfähiges Material ist und die Erwärmung durch Widerstandswärmung ausgeführt wird.

8. Verfahren nach einem der Ansprüche 1 bis 7, bei dem der Klebstoff ein halogenierter Gummi, ein Phenolklebstoff oder ein Isocyonatklebstoff ist.

9. Verfahren nach einem der Ansprüche 1 bis 8, bei dem das wärmeerzeugende Material im Klebstoff verteilt ist.

10. Verfahren nach einem der Ansprüche 1 bis 8, bei dem das wärmeerzeugende Material in Form eines Bandes oder Films aufgebracht wird.

11. Verfahren nach Anspruch 7 oder 8, wenn abhängig von Anspruch 7, bei dem das leitfähige Material direkt auf die Oberfläche des faserverstärkten Kunststoffmaterials aufgebracht wird.

12. Verwendung eines wärmeerzeugenden Materials, insbesondere eines durch elektrische, elektromagnetische oder magnetische Kräfte aktivierbaren Materials, zur Anhebung der Temperatur eines wärmeaktivierten Klebstoffs, mit dem es in thermischem Kontakt ist, auf eine Temperatur, die ausreichend hoch ist, um den Klebstoff zu aktivieren, um Oberflächen miteinander zu verbinden, die aus einem Material oder Materialien besteht oder bestehen, das bzw. die auf Wärme empfindlich ist bzw. sind, wobei eine Oberfläche aus faserverstärktem Kunststoffmaterial und die andere Oberfläche aus einem Elastomer besteht.

13. Verwendung eines Klebstoffs zur Verbindung von faserverstärktem Kunststoffmaterial und vulkanisiertem Gummi, welcher Klebstoff exotherm reagierendes Material in einem Anteil enthält, der ausreichend ist, um eine exotherme Reaktion hervorzurufen derart, daß der Klebstoff eine Temperatur erreicht, bei der eine Verklebung stattfinden kann.

## Revendications

1. Méthode pour lier une matière plastique renforcée de fibres (ci-après FRP) et un caoutchouc vulcanisé, consistant à positionner un adhésif et une matière génératrice de chaleur entre les surfaces opposées de la matière FRP et du caoutchouc vulcanisé pour former un stratifié, à appliquer de la pression au stratifié, et à élever la température de la matière génératrice de chaleur, suffisamment pour établir l'adhérence entre la matière FRP et le caoutchouc vulcanisé.

2. Méthode selon la revendication 1, où le renforcement de fibres de la matière FRP est une fibre de verre, une fibre de carbone, une fibre d'un polyamide aromatique, ou un mélange de deux ou plusieurs de ces fibres.

3. Méthode selon la revendication 1 ou la revendication 2, où le caoutchouc vulcanisé est du caoutchouc naturel, ou un caoutchouc synthétique, par exemple, SBR, BR, EPDM, ou CR, ou un mélange de deux ou plusieurs de ces caoutchoucs.

4. Méthode selon l'une quelconque des revendications 1 à 3, où la matière génératrice de chaleur est une matière qui produit de la chaleur lorsqu'elle est soumise à des forces électriques, électromagnétiques, ou magnétiques.

5. Méthode selon l'une quelconque des revendications 1 à 4, où la matière génératrice de chaleur est un diélectrique et le chauffage est effectué par un chauffage diélectrique.

6. Méthode selon l'une quelconque des revendications 1 à 4, où la matière génératrice de chaleur est une matière ferromagnétique et le chauffage est effectué par chauffage par induction.

7. Méthode selon l'une quelconque des revendications 1 à 4, où la matière génératrice de chaleur est une matière électriquement conductrice et le chauffage est effectué par chauffage électrique.

8. Méthode selon l'une quelconque des revendications 1 à 7, où la matière adhésive est un caoutchouc halogéné, un adhésif phénolique ou un adhésif d'isocyanate.

9. Méthode selon l'une quelconque des revendications 1 à 8, où la matière génératrice de chaleur est dispersée dans tout l'adhésif.

10. Méthode selon l'une quelconque des revendications 1 à 8, où la matière génératrice de chaleur est appliquée sous la forme d'un ruban ou d'un film.

11. Méthode selon la revendication 7, ou selon la revendication 8 dépendant de la revendication 7, où la matière conductrice est déposée directement à la surface de la matière FRP.

12. Utilisation d'une matière génératrice de chaleur, en particulier une pouvant être activée par des forces électriques, électromagnétiques, ou magnétiques, pour élever la température d'un adhésif activé à la chaleur avec lequel elle est en contact intime juqu'à une température suffisante pour activer l'adhésif pour lier des surfaces qui sont en une matière ou des matières qui est ou sont sensibles à la chaleur, une surface comprenant une matière FRP et l'autre surface comprenant un élastomère.

13. Utilisation, pour joindre une matière FRP et du caoutchouc vulcanisé, d'une matière adhésive comprenant une matière exothermique en une proportion suffisante pour provoquer une réaction exothermique de manière que la matière adhésive atteigne une température à laquelle l'adhérence peut avoir lieu.
